# FASCICULE DE BREVET EUROPEEN

(11) **EP 4 529 598 B1**
(45) Date de publication et mention de la délivrance du brevet: **16.09.2026**
(21) Numéro de dépôt: 23727843.7
(22) Date de dépôt: 15.05.2023
(51) Int. Cl.: F16N 13/10, F01D 25/20, F02C 7/06, F02C 7/32

(54) **ACCOUPLEMENT PAR PROFILS POLYGONAUX DE POMPES DANS UN GROUPE DE LUBRIFICATION**
MEHRKANTPROFILKUPPLUNG VON PUMPEN IN EINER SCHMIERANORDNUNG
POLYGONAL PROFILE COUPLING OF PUMPS IN A LUBRICATION ASSEMBLY

(30) Priorité: 23.05.2022 BE 202205389
(43) Date de publication de la demande: 02.04.2025
(73) Titulaire: Safran Aero Boosters, 4041 Herstal (BE)
(72) Inventeur: BORLON, Quentin, 4041 Herstal (BE)
(74) Mandataire: Gevers Patents
(86) Numéro de dépôt international: PCT/EP2023/063013
(87) Numéro de publication internationale: WO 2023/227411

(56) Documents cités:
- US-A- 3 529 419
- US-A- 4 631 009
- US-A1- 2007 059 194
- US-A1- 2011 223 049
- US-A1- 2013 319 140
- US-A1- 2015 377 282
- "DIN32711", DIN-NORM, DIN (DEUTSCHES INSTITUT FÜR NORMUNG, 1 March 1979 (1979-03-01), pages 1 - 3, XP008090971
- WINTERFELD J ET AL: "WELLE-NABE-VERBINDUNGEN MIT DEM POLYGONPROFIL P4C", ANTRIEBSTECHNIK, VEREINIGTE FACHVERLAGE, MAINZ, DE, vol. 38, no. 5, 1 May 1999 (1999-05-01), pages 66 - 70, XP000828905, ISSN: 0722-8546
- FRANK A ET AL: "Die "Polygon-Normen" DIN 32711 und DIN 32712 - "Upgrading" oder Neunormung", INTERNET CITATION, 20 November 2003 (2003-11-20), pages 1 - 25, XP002692240, Retrieved from the Internet <URL:http://www.ift.tugraz.at/topics/vdi-tagung%202003%20folien.pdf> [retrieved on 20130214]

## Description

### Domaine technique

La présente invention concerne le couplage en rotation entre deux pompes rotatives d'un groupe de lubrification de turbomachine d'aéronef.

### Art antérieur

Les pompes des groupes de lubrification de turbomachine d'aéronef sont généralement empilées et leurs arbres couplés en rotation de façon à obtenir un entrainement rotatif. Une façon connue de réaliser ce couplage est de le faire via des cannelures. Le document US4631009 A en donne un exemple.

Les cannelures sont usinées par électroérosion ou brochage. Ces opérations sont longues et complexes. Parfois, les cannelures sont si petites qu'il est nécessaire d'utiliser des petits outils qui se déforment, rendant l'usinage quasiment impossible.

### Résumé de l'invention

Un objet de la présente invention est d'obtenir un groupe de lubrification plus facile à fabriquer. A cet effet, l'invention propose un groupe de lubrification pour turbomachine d'aéronef comprenant :
- une première pompe comprenant un premier arbre ;
- une deuxième pompe comprenant un deuxième arbre ;
caractérisé en ce que le premier arbre et le deuxième arbre sont couplés mécaniquement via au moins un accouplement par profils polygonaux.

L'accouplement par profils polygonaux est usinable par fraisage (femelle) ou tournage (male). Il est donc plus facile à réaliser que l'accouplement par cannelures.

L'accouplement par profils polygonaux est connu de l'homme du métier, notamment par les normes DIN 32711 parties 1 et 2.

Selon un mode de réalisation, le premier arbre et le deuxième arbre sont couplés en rotation via l'au moins un accouplement par profils polygonaux.

Selon un mode de réalisation, le deuxième arbre est couplé mécaniquement au premier arbre par un élément de couplage, et l'élément de couplage comprend une première extrémité formant une partie mâle d'un premier accouplement par profils polygonaux et le premier arbre comprend une première extrémité formant une partie femelle dudit premier accouplement par profils polygonaux.

Selon un mode de réalisation, lesdites parties mâle et femelle sont disjointes l'une de l'autre.

Le fait que les parties mâle et femelle sont disjointes permet que l'écart entre elles reprennent les défauts d'alignement des arbres.

Selon un mode de réalisation préféré, l'invention concerne un groupe de lubrification pour turbomachine d'aéronef comprenant :
- une première pompe comprenant un premier arbre ;
- une deuxième pompe comprenant un deuxième arbre couplé mécaniquement au premier arbre par un élément de couplage ;
caractérisé en ce que l'élément de couplage comprend une première extrémité formant une partie mâle d'un premier accouplement par profils polygonaux et le premier arbre comprend une première extrémité formant une partie femelle dudit premier accouplement par profils polygonaux, lesdites parties mâle et femelle étant disjointes l'une de l'autre.

Selon un mode de réalisation, le profil de la première extrémité de l'élément de couplage et le profil de la première extrémité du premier arbre satisfont aux égalités suivantes : $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ où *α* est une variable, *x* et *y* sont des coordonnées cartésiennes, *Rₘ* est un premier paramètre, *e* est un deuxième paramètre, et *n* est un troisième paramètre entier supérieur ou égal à 3.

*Rₘ* et e sont plus petits pour la première extrémité de l'élément de couplage que pour la première extrémité du premier arbre pour que la partie femelle soit plus large que la partie mâle. *n* a la même valeur pour la première extrémité de l'élément de couplage que pour la première extrémité du premier arbre.

Selon un mode de réalisation, la partie mâle et la partie femelle du premier accouplement par profils polygonaux ont trois côtés. Les parties mâle et femelle sont essentiellement des triangles aux angles arrondis. Par conséquent, n = 3 dans les égalités.

Selon un mode de réalisation, la partie mâle et la partie femelle du premier accouplement par profils polygonaux sont distants d'au moins 10 µm.

Selon un mode de réalisation, l'élément de couplage est d'une pièce avec le deuxième arbre.

Selon un mode de réalisation, le deuxième arbre comprend une première extrémité jointe à une deuxième extrémité de l'élément de couplage.

Selon un mode de réalisation, l'élément de couplage est une pièce différente du deuxième arbre.

Selon un mode de réalisation, l'élément de couplage comprend une deuxième extrémité formant une partie mâle d'un deuxième accouplement par profils polygonaux et le deuxième arbre comprend une première extrémité formant une partie femelle dudit deuxième accouplement par profils polygonaux, lesdites parties mâle et femelle étant disjointes l'une de l'autre.

Selon un mode de réalisation, le profil de la deuxième extrémité de l'élément de couplage et le profil de la première extrémité du deuxième arbre satisfont aux égalités suivantes : $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ où *α* est une variable, *x* et *y* sont des coordonnées cartésiennes, *Rₘ* est un premier paramètre, *e* est un deuxième paramètre, et *n* est un troisième paramètre entier supérieur ou égal à 3.

*Rₘ* et *e* sont plus petits pour la deuxième extrémité de l'élément de couplage que pour la première extrémité du deuxième arbre. *n* a la même valeur pour la deuxième extrémité de l'élément de couplage que pour la première extrémité du deuxième arbre.

Selon un mode de réalisation, la partie mâle et la partie femelle du deuxième accouplement par profils polygonaux ont trois côtés.

Selon un mode de réalisation, la partie mâle et la partie femelle du deuxième accouplement par profils polygonaux sont distants d'au moins 10 µm.

Selon un mode de réalisation, les première et deuxième pompes sont des pompes à palettes.

Selon un mode de réalisation, les première et deuxième pompes sont des pompes à palettes desmodromiques ou des pompes gerotor.

Selon un mode de réalisation, le groupe de lubrification comprend en outre une troisième pompe comprenant un troisième arbre couplé mécaniquement au deuxième arbre par un autre élément de couplage, dans lequel l'autre élément de couplage comprend une autre première extrémité formant une partie mâle d'un autre accouplement par profils polygonaux et le deuxième arbre comprend une deuxième extrémité formant une partie femelle dudit autre accouplement par profils polygonaux, les parties mâle et femelle dudit autre accouplement par profils polygonaux étant disjointes l'une de l'autre.

L'invention propose en outre un aéronef comprenant un groupe de lubrification tel que décrit dans le présent document.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 est un schéma d'un groupe de lubrification compatible avec l'invention,
- la figure 2 est un schéma d'un autre groupe de lubrification compatible avec l'invention,
- la figure 3 est une vue en coupe d'un accouplement par profils polygonaux compatible avec l'invention,
- la figure 4 est une vue en coupe d'un profil polygonal compatible avec l'invention, et
- la figure 5 est une vue en coupe d'un autre profil polygonal compatible avec l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants. En outre, les fonctions décrites peuvent être réalisées par d'autres structures que celles décrites dans le présent document.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

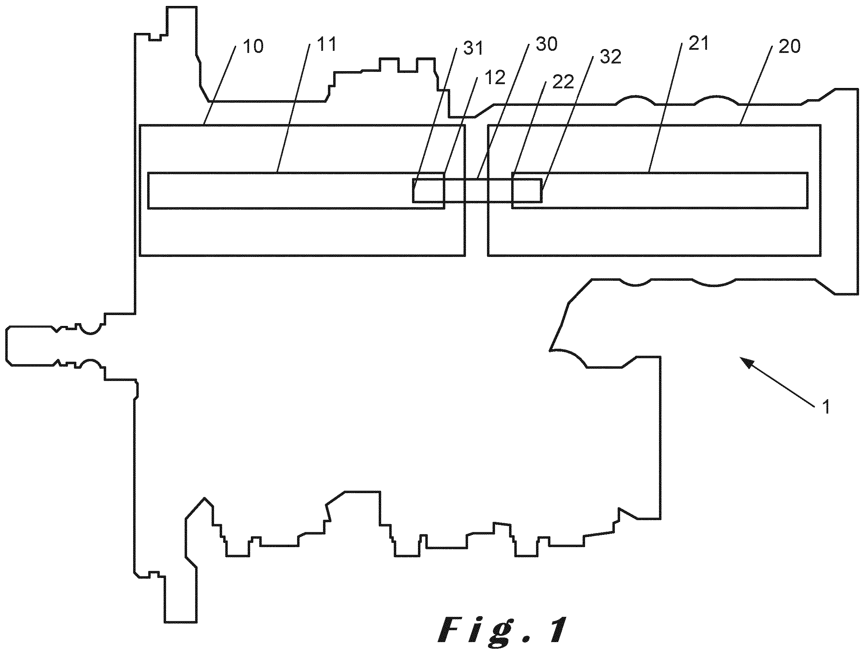

La figure 1 illustre un groupe de lubrification 1 selon un mode de réalisation de l'invention. Il comprend une première pompe 10 comprenant un premier arbre 11 et une deuxième pompe 20 comprenant un deuxième arbre 21. Les arbres 11, 21 sont couplés mécaniquement en rotation de façon à ce que l'un d'eux puisse entrainer l'autre en rotation. Ce couplage est réalisé via un élément de couplage 30 qui comprend une première extrémité 31 et une deuxième extrémité 32, opposée à la première extrémité 31.

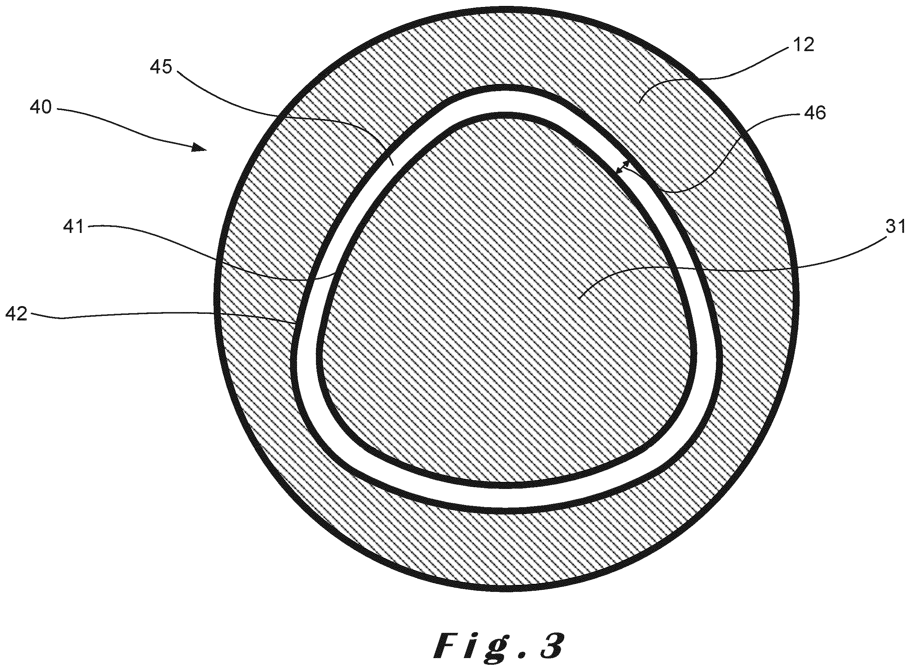

Le premier arbre 11 comprend une première extrémité 12. Le deuxième arbre 21 comprend une première extrémité 22 et une deuxième extrémité 23. La première extrémité 31 de l'élément de couplage 30 est engagée dans la première extrémité 12 du premier arbre 11. La première extrémité 31 de l'élément de couplage 30 forme ainsi une partie mâle 41 d'un premier accouplement par profils polygonaux 40 (qui sera décrit en référence à la figure 3), la première extrémité 12 du premier arbre 11 formant une partie femelle 42 dudit premier accouplement par profils polygonaux 40.

Dans le mode de réalisation de la figure 1, la deuxième extrémité 32 de l'élément de couplage 30 est engagée dans la première extrémité 22 du deuxième arbre 21. La deuxième extrémité 32 de l'élément de couplage 30 forme ainsi une partie mâle 41 d'un deuxième accouplement par profils polygonaux 40 (qui sera décrit en référence à la figure 3), la première extrémité 22 du deuxième arbre 21 formant une partie femelle 42 dudit deuxième accouplement par profils polygonaux 40.

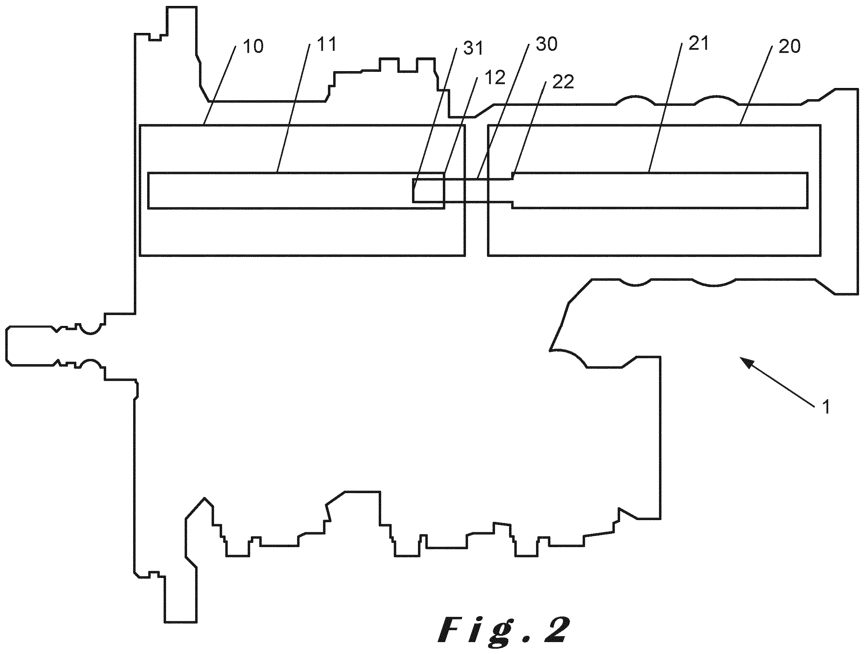

Dans le mode de réalisation de la figure 2, la deuxième extrémité 32 de l'élément de couplage 30 est jointe à la première extrémité 22 du deuxième arbre 21 de façon à ce que l'élément de couplage 30 et le deuxième arbre 21 ne forment qu'une seule pièce.

Le groupe de lubrification 1 peut comprendre une troisième pompe, une quatrième etc. Les pompes sont empilées et leurs arbres sont couplés en rotation via un accouplement par profils polygonaux 40. Par exemple, un troisième arbre d'une troisième pompe peut être couplé mécaniquement à la deuxième extrémité 23 du deuxième arbre 22 par un autre élément de couplage, qui comprend une autre première extrémité. L'autre première extrémité forme une partie mâle d'un autre accouplement par profils polygonaux et la deuxième extrémité 23 du deuxième arbre 22 forme une partie femelle dudit autre accouplement par profils polygonaux.

Les pompes 10, 20 sont préférentiellement des pompes à palettes, par exemple desmodromiques, ou des pompes gerotors.

La figure 3 est un exemple d'accouplement par profils polygonaux 40 entre une partie mâle 41 et une partie femelle 42 disjointes l'une de l'autre. L'accouplement 40 illustré par la figure 3 peut être un premier (les références 12 et 31 correspondent à celui-ci), un deuxième, et/ou un autre accouplement par profils polygonaux de la présente divulgation. Le fait que la partie mâle 41 et la partie femelle 42 sont disjointes implique qu'elles ne sont pas fixées l'une à l'autre. Par ailleurs, même si elles peuvent être en contact lors de l'entrainement, au repos, il existe un espace 45 autour de la partie mâle 41, qui la sépare de la partie femelle 42. La distance 46 entre la partie mâle 41 et la partie femelle 42 peut être d'au moins 10 µm, de préférence d'au moins 100 µm. Cette distance 46 est mesurée dans un plan de section, par exemple lorsque les parties mâle 41 et femelle 42 sont alignées sur un même axe.

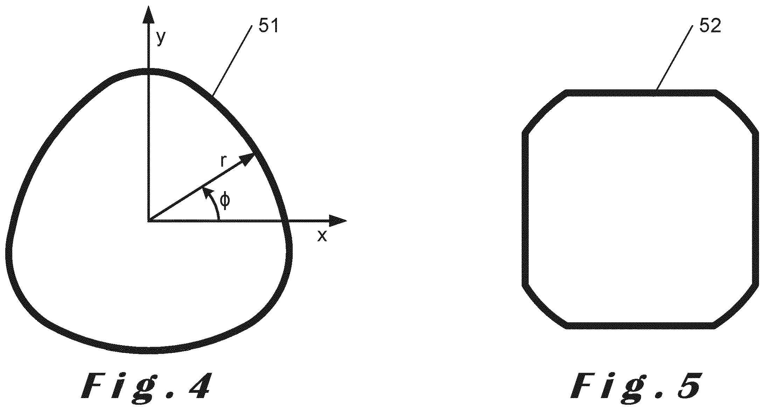

La figure 4 montre un profil polygonal triangulaire, avec un repère de coordonnées cartésiennes (x, y) et un repère de coordonnées polaires (r, ϕ). De façon générale, un profil polygonal est défini par les égalités suivantes en coordonnées cartésiennes : $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$

En coordonnées polaires, cela se traduit par $ρ \left(α\right) = \sqrt{{\left[{R}_{m}-e⋅cos\left(n⋅α\right)\right]}^{2} + {\left[n⋅e⋅sin\left(n⋅α\right)\right]}^{2}}$ $Φ \left(α\right) = α + arctan \left[\frac{n ⋅ e ⋅ sin \left(n⋅α\right)}{{R}_{m} - e ⋅ cos \left(n⋅α\right)}\right]$

*α* est une variable, *Rₘ* est un premier paramètre, *e* est un deuxième paramètre, et *n* est un troisième paramètre. *n* est un entier supérieur ou égal à 3. Il faut 3 pour la figure 4 (profil polygonal triangulaire), et 4 pour la figure 5 (profile polygonal en quadrilatère). *α* varie de façon à parcourir la courbe du profil polygonal. *n* est identique pour la partie mâle 41 et la partie femelle 42. *Rₘ* et *e* sont plus petits pour la partie mâle 41 que pour la partie femelle 42. En d'autres termes, la partie femelle 42 a un profil plus large que la partie mâle 41.

En d'autres termes, l'invention se rapporte à un groupe de lubrification 1 comprenant deux pompes 10, 20 dont les arbres 11, 21 sont couplés en rotation via au moins un accouplement par profils polygonaux 40.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « I' », pour introduire un élément n'exclut pas la présence d'une pluralité de ces éléments. Les numéros de référence dans les revendications ne limitent pas leur portée.

## Revendications

1. Groupe de lubrification (1) pour turbomachine d'aéronef comprenant :
• une première pompe (10) comprenant un premier arbre (11) ;
• une deuxième pompe (20) comprenant un deuxième arbre (21) ; **caractérisé en ce que** le premier arbre (11) et le deuxième arbre (21) sont couplés mécaniquement via au moins un accouplement par profils polygonaux (40).

2. Groupe de lubrification selon la revendication 1, dans lequel le premier arbre (11) et le deuxième arbre (21) sont couplés en rotation via l'au moins un accouplement par profils polygonaux (40).

3. Groupe de lubrification selon la revendication 1 ou 2, dans lequel le deuxième arbre (21) est couplé mécaniquement au premier arbre (11) par un élément de couplage (30), et dans lequel l'élément de couplage (30) comprend une première extrémité (31) formant une partie mâle (41) d'un premier accouplement par profils polygonaux (40) et le premier arbre (11) comprend une première extrémité (12) formant une partie femelle (42) dudit premier accouplement par profils polygonaux (40).

4. Groupe de lubrification selon la revendication précédente, dans lequel lesdites parties mâle (41) et femelle (42) sont disjointes l'une de l'autre.

5. Groupe de lubrification selon l'une des revendications 3 ou 4, dans lequel le profil de la première extrémité (31) de l'élément de couplage (30) et le profil de la première extrémité (12) du premier arbre (11) satisfont aux égalités suivantes : $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ où *α* est une variable, *x* et y sont des coordonnées cartésiennes, *Rₘ* est un premier paramètre, e est un deuxième paramètre, et n est un troisième paramètre entier supérieur ou égal à 3.

6. Groupe de lubrification selon l'une quelconque des revendications 3 à 5, dans lequel la partie mâle et la partie femelle du premier accouplement par profils polygonaux (40) ont trois côtés.

7. Groupe de lubrification selon l'une quelconque des revendications 3 à 6, dans lequel la partie mâle et la partie femelle du premier accouplement par profils polygonaux (40) sont distants d'au moins 10 µm.

8. Groupe de lubrification selon l'une quelconque des revendications 3 à 7, dans lequel l'élément de couplage (30) est d'une pièce avec le deuxième arbre (21).

9. Groupe de lubrification selon la revendication précédente, dans lequel le deuxième arbre (21) comprend une première extrémité (22) jointe à une deuxième extrémité (32) de l'élément de couplage (30).

10. Groupe de lubrification selon l'une quelconque des revendications 3 à 7, dans lequel l'élément de couplage (30) est une pièce différente du deuxième arbre (21).

11. Groupe de lubrification selon la revendication précédente, dans lequel l'élément de couplage (30) comprend une deuxième extrémité (32) formant une partie mâle (41) d'un deuxième accouplement par profils polygonaux (40) et le deuxième arbre (21) comprend une première extrémité (22) formant une partie femelle (42) dudit deuxième accouplement par profils polygonaux (40), lesdites parties mâle (41) et femelle (42) étant disjointes l'une de l'autre.

12. Groupe de lubrification selon la revendication précédente, dans lequel le profil de la deuxième extrémité (32) de l'élément de couplage (30) et le profil de la première extrémité (22) du deuxième arbre (21) satisfont aux égalités suivantes : $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ où *α* est une variable, *x* et *y* sont des coordonnées cartésiennes, *Rₘ* est un premier paramètre, *e* est un deuxième paramètre, et *n* est un troisième paramètre entier supérieur ou égal à 3.

13. Groupe de lubrification selon l'une quelconque des revendications précédentes, dans lequel les première (10) et deuxième (20) pompes sont des pompes à palettes, de préférence des pompes à palettes desmodromiques ou des pompes gerotor.

14. Groupe de lubrification selon l'une quelconque des revendications précédentes, comprenant en outre une troisième pompe comprenant un troisième arbre couplé mécaniquement au deuxième arbre (21) par un autre élément de couplage, dans lequel l'autre élément de couplage comprend une autre première extrémité formant une partie mâle d'un autre accouplement par profils polygonaux et le deuxième arbre (21) comprend une deuxième extrémité (23) formant une partie femelle dudit autre accouplement par profils polygonaux, les parties mâle et femelle dudit autre accouplement par profils polygonaux étant disjointes l'une de l'autre.

15. Aéronef comprenant un groupe de lubrification selon l'une quelconque des revendications précédentes.

## Patentansprüche

1. Schmieranordnung (1) für Turbotriebwerk eines Luftfahrzeugs, umfassend:
- eine erste Pumpe (10), die eine erste Welle (11) umfasst;
- eine zweite Pumpe (20), die eine zweite Welle (21) umfasst;
**dadurch gekennzeichnet, dass** die erste Welle (11) und die zweite Welle (21) über mindestens eine Mehrkantprofilkupplung (40) mechanisch gekuppelt sind.

2. Schmieranordnung nach Anspruch 1, wobei die erste Welle (11) und die zweite Welle (21) über die mindestens eine Mehrkantprofilkupplung (40) drehbar gekuppelt sind.

3. Schmieranordnung nach Anspruch 1 oder 2, wobei die zweite Welle (21) über ein Kupplungselement (30) mechanisch mit der ersten Welle (11) gekuppelt ist, und wobei das Kupplungselement (30) ein erstes Ende (31) umfasst, das ein männliches Teil (41) einer ersten Mehrkantprofilkupplung (40) bildet, und die erste Welle (11) ein erstes Ende (12) umfasst, das ein weibliches Teil (42) der ersten Mehrkantprofilkupplung (40) bildet.

4. Schmieranordnung nach dem vorstehenden Anspruch, wobei das männliche (41) und das weibliche Teil (42) voneinander getrennt sind.

5. Schmieranordnung nach einem der Ansprüche 3 oder 4, wobei das Profil des ersten Endes (31) des Kupplungselements (30) und das Profil des ersten Endes (12) der ersten Welle (11) die folgenden Gleichungen erfüllen: $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ wobei *α* eine Variable ist, x und *y* kartesische Koordinaten sind, Rₘ ein erster Parameter ist, e ein zweiter Parameter ist, und *n* ein dritter Parameter größer oder gleich 3 ist.

6. Schmieranordnung nach einem der Ansprüche 3 bis 5, wobei das männliche Teil und das weibliche Teil der ersten Mehrkantprofilkupplung (40) drei Seiten aufweisen.

7. Schmieranordnung nach einem der Ansprüche 3 bis 6, wobei das männliche Teil und das weibliche Teil der ersten Mehrkantprofilkupplung (40) um mindestens 10 µm voneinander beabstandet sind.

8. Schmieranordnung nach einem der Ansprüche 3 bis 7, wobei das Kupplungselement (30) einstückig mit der zweiten Welle (21) ist.

9. Schmieranordnung nach dem vorstehenden Anspruch, wobei die zweite Welle (21) ein erstes Ende (22) umfasst, das mit einem zweiten Ende (32) des Kupplungselements (30) verbunden ist.

10. Schmieranordnung nach einem der Ansprüche 3 bis 7, wobei das Kupplungselement (30) ein von der zweiten Welle (21) unterschiedliches Werkstück ist.

11. Schmieranordnung nach dem vorstehenden Anspruch, wobei das Kupplungselement (30) ein zweites Ende (32) umfasst, das ein männliches Teil einer zweiten Mehrkantprofilkupplung (40) bildet, und die zweite Welle (21) ein erstes Ende (22) umfasst, das ein weibliches Teil (42) der zweiten Mehrkantprofilkupplung (40) bildet, wobei das männliche (41) und das weibliche Teil (42) voneinander getrennt sind.

12. Schmieranordnung nach dem vorstehenden Anspruch, wobei das Profil des zweiten Endes (32) des Kupplungselements (30) und das Profil des ersten Endes (22) der zweiten Welle (21) die folgenden Gleichungen erfüllen: $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ wobei *α* eine Variable ist, *x* und *y* kartesische Koordinaten sind, R*ₘ* ein erster Parameter ist, e ein zweiter Parameter ist, und *n* ein dritter Parameter größer oder gleich 3 ist.

13. Schmieranordnung nach einem der vorstehenden Ansprüche, wobei die erste (10) und die zweite (20) Pumpe Drehschieberpumpen sind, vorzugsweise desmodromsiche Drehschieberpumpen oder Gerotor-Pumpen.

14. Schmieranordnung nach einem der vorstehenden Ansprüche, das weiter eine dritte Pumpe umfasst, die eine dritte Welle umfasst, die über ein anderes Kupplungselement mechanisch mit der zweiten Welle (21) gekuppelt ist, wobei das andere Kupplungselement ein anderes erstes Ende umfasst, das ein männliches Teil einer anderen Mehrkantprofilkupplung bildet, und die zweite Welle (21) ein zweites Ende (23) umfasst, das ein weibliches Teil der anderen Mehrkantprofilkupplung bildet, wobei das männliche und das weibliche Teil der anderen Mehrkantprofilkupplung voneinander getrennt sind.

15. Luftfahrzeug, das eine Schmieranordnung nach einem der vorstehenden Ansprüche umfasst.

## Claims

1. Lubrication assembly (1) for an aircraft turbine engine comprising:
- a first pump (10) comprising a first shaft (11);
- a second pump (20) comprising a second shaft (21);
**characterized in that** the first shaft (11) and the second shaft (21) are mechanically coupled by means of at least one polygonal profile (40) coupling.

2. Lubrication assembly according to claim 1, wherein the first shaft (11) and the second shaft (21) are rotatably coupled by means of the at least one polygonal profile (40) coupling.

3. Lubrication assembly according to claim 1 or 2, wherein the second shaft (21) is mechanically coupled to the first shaft (11) by a coupling element (30), and wherein the coupling element (30) comprises a first end (31) forming a male part (41) of a first polygonal profile (40) coupling and the first shaft (11) comprises a first end (12) forming a female part (42) of said first polygonal profile (40) coupling.

4. Lubrication assembly according to the preceding claim, wherein said male (41) and female (42) parts are separated from one another.

5. Lubrication assembly according to any one of claims 3 or 4, wherein the profile of the first end (31) of the coupling element (30) and the profile of the first end (12) of the first shaft (11) satisfy the following equalities: $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ where a is a variable, x and y are Cartesian coordinates, *Rₘ* is a first parameter, e is a second parameter, and *n* is a third integer parameter, greater than or equal to 3.

6. Lubrication assembly according to any one of claims 3 to 5, wherein the male part and the female part of the first polygonal profile (40) coupling have three sides.

7. Lubrication assembly according to any one of claims 3 to 6, wherein the male part and the female part of the first polygonal profile (40) coupling are distant by at least 10µm.

8. Lubrication assembly according to any one of claims 3 to 7, wherein the coupling element (30) is a part with the second shaft (21).

9. Lubrication assembly according to the preceding claim, wherein the second shaft (21) comprises a first end (22) joined to a second end (32) of the coupling element (30).

10. Lubrication assembly according to any one of claims 3 to 7, wherein the coupling element (30) is a part which is different from the second shaft (21).

11. Lubrication assembly according to the preceding claim, wherein the coupling element (30) comprises a second end (32) forming a male part (41) of a second polygonal profile (40) coupling and the second shaft (21) comprises a first end (22) forming a female part (42) of said second polygonal profile (40) coupling, said male (41) and female (42) parts being separated from one another.

12. Lubrication assembly according to the preceding claim, wherein the profile of the second end (32) of the coupling element (30) and the profile of the first end (22) of the second shaft (21) satisfy the following equalities: $x \left(α\right) = \left[{R}_{m}-e⋅cos\left(n⋅α\right)\right] ⋅ cos \left(n⋅α\right) - n ⋅ e ⋅ sin \left(n⋅α\right) ⋅ sin \left(α\right)$ $y \left(α\right) = \left[{R}_{m}-e⋅cos\left(n⋅α\right)\right] ⋅ sin \left(n⋅α\right) + n ⋅ e ⋅ sin \left(n⋅α\right) ⋅ cos \left(α\right)$ where α is a variable, *x* and *y* are Cartesian coordinates, *Rₘ* is a first parameter, e is a second parameter, and *n* is a third integer parameter greater than or equal to 3.

13. Lubrication assembly according to any one of the preceding claims, wherein the first (10) and second (20) pumps are vane pumps, preferably desmodromic vane pumps or gerotor pumps.

14. Lubrication assembly according to any one of the preceding claims, further comprising a third pump comprising a third shaft, mechanically coupled to the second shaft (21) by another coupling element, wherein the other coupling element comprises another first end forming a male part and another polygonal profile coupling and the second shaft (21) comprises a second end (23) forming a female part of said other polygonal profile coupling, the male and female parts of said other polygonal profile coupling being separated from one another.

15. Aircraft comprising a lubrication assembly according to any one of the preceding claims.
